# EUROPEAN PATENT SPECIFICATION

(11) **EP 0 964 380 B1**
(45) Date of publication and mention of the grant of the patent: **12.07.2006**
(21) Application number: 99110557.8
(22) Date of filing: 01.06.1999
(51) Int. Cl.: G08G 1/16

(54) **Moving body detection system**
Detektionssystem von bewegenden Einheiten
Système de détection d'unités mobiles

(30) Priority: 10.06.1998 JP 16265498
(43) Date of publication of application: 15.12.1999
(73) Proprietor: HONDA GIKEN KOGYO KABUSHIKI KAISHA, Minato-ku, Tokyo (JP)
(72) Inventor: Yamagata, Tetsuo, K. K. Honda Gijutsu Kenkyusho, Wako-shi, Saitama (JP); Tabata, Hajime, K. K. Honda Gijutsu Kenkyusho, Wako-shi, Saitama (JP)
(74) Representative: Liska, Horst

(56) References cited:
- US-A- 5 068 654
- US-A- 5 572 201
- WILLIAMSON T ET AL: "DEVELOPMENT AND OPERATION OF THE TRAFFIC ALERT AND COLLISION AVOIDANCE SYSTEM (TCAS)" PROCEEDINGS OF THE IEEE,US,IEEE. NEW YORK, vol. 77, no. 11, 1 November 1989 (1989-11-01), pages 1735-1744, XP000101187 ISSN: 0018-9219
- DIEFES D ET AL: "Concept design for a low cost cockpit display/collision avoidance system for general aviation aircraft" IEEE 1996 POSITION LOCATION AND NAVIGATION SYMPOSIUM (CAT. NO.96CH35879), PROCEEDINGS OF POSITION, LOCATION AND NAVIGATION SYMPOSIUM - PLANS 96, ATLANTA, GA, USA, 22-26 APRIL 1996, pages 352-359, XP002143629 1996, New York, NY, USA, IEEE, USA ISBN: 0-7803-3085-4
- PATENT ABSTRACTS OF JAPAN vol. 1995, no. 11, 26 December 1995 (1995-12-26) -& JP 07 225274 A (HONDA MOTOR CO LTD), 22 August 1995 (1995-08-22)

## Description

The present invention relates to a moving body detection method according to the preamble of claim 1 for detecting moving bodies by exchanging signals between moving bodies such as vehicles and pedestrians, etc. The present invention further relates to a moving body detection device according to the preamble of claim 4.

Such a method and a device are known from Williamson, T., et al.: "Development and Operation of the Traffic Alert and Collision Avoidance System (TCAS)", in: Proceedings of the IEEE, New York, US, vol. 77, no. 11, November 1, 1989 (1989-11-01), pages 1735-1744.

This document discloses the air-traffic related traffic alert and collision avoidance system (TCAS) which in a certain embodiment can comprise so-called "mode S transponders". The TCAS mode S detection method operates according to page 1739 of this document as follows:

Each aircraft periodically emits so-called "squitter replies" containing only an ID code of the respective transmitting aircraft. This ID code signal is omnidirectionally emitted and as such received by all nearby aircraft.

The TCAS mode S system further assumes that a rate of squitter reception, i.e. a rate of ID code signals from one and the same aircraft, is lower for more distant aircraft and is consequently the higher the closer the respective transmitting aircraft is to a detecting aircraft. Based on the rate of squitter reception, the TCAS mode S detection system decides whether a nearby aircraft should be interrogated, in order to determine its range or distance.

Since it is stated in this document that an interrogation can be "addressed" to mode S transponders, it is assumed that the interrogation signal (detection signal) includes the ID code of the nearby aircraft. Upon receipt of an interrogation or detection signal, the nearby aircraft responds by an omnidirectionally emitted so-called "mode S fruit reply" including the ID of the nearby aircraft and additionally its current altitude. This interrogation is carried out at a certain rate proportional to a rough measure of the potential of the nearby aircraft to be a collision threat.

Although this known protection system results in a reliable picture of relative distances of moving bodies relative to each other, this known system is confronted with the problem of overloading the available communication channels (see first paragraph below "interference limiting" in the left column of page 1740). Furthermore, this problem cannot be easily solved, since it is intended that squitter replies as well as mode S fruit replies are omnidirectionally transmitted, as it is considered advantageous that aircraft might receive mode S fruit replies and the altitude information associated thereto without having actively interrogated the respective transponder (see middle portion of right column on page 1739). Additionally, although the interrogation activity is proportional to the potential of a nearby aircraft to be a collision threat, in order to further relieve the communication channels, there is no obvious order in interrogating nearby aircraft, such that it might happen that a very close aircraft is interrogated after more distant aircraft were contacted, although the closer aircraft poses the higher risk to the detecting one. The interrogation activity proportional to an assumed collision threat of a nearby aircraft strives to ensure to contact a closer nearby aircraft as soon as possible, but with the trade-off of a considerably higher load of the communication channels.

A further discussion of the TCAS mode S system is contained in Diefes, D. et al.: "Concept design for a low cost cockpit display/collision avoidance system for a general , aviation aircraft", IEEE 1996, Position Location and Navigation Symposium (cat. no. 96CH35879), in: Proceeding of Position, Location and Navigation Symposium - Plans 96, Atlanta, Ga, USA, April 22-26, 1996, pages 352-359.

A further discussion of related background art is given in the following:

Various methods have been put forward in the related art for detecting other approaching vehicles and other moving bodies while driving.

For example, in that disclosed in Japanese Patent Laid-open Publication No. Hei 2 (1990)-216600, a receiving device provided in a vehicle carries out monitoring as the vehicle progresses and an alarm is generated and the presence of a moving body made known as a result of the receiving device receiving an alarm signal transmitted by a transmission device provided on another moving body.

However, as the number of moving bodies that cause the alarm is not known, when only one vehicle is confirmed by sight it is difficult to be aware of the presence of other vehicles.

Therefore, in that disclosed in Japanese Patent Laid-open Publication No. Hei 7(1995)-225274, confirmation is displayed as a result of discerning whether or not one or a plurality of moving bodies exist within a prescribed distance by comparing intervals of rises of consecutive pulses occurring in a receive signal with a reference period.

However, only whether one or a plurality of opposing moving bodies is present is known and it is not possible to be aware of configurations such as arrangement when a plurality of moving bodies are present.

It is more convenient for the driver of the vehicle to be able to understand how the opposing moving bodies are arranged, rather than just having information that one or a plurality of moving bodies are present.

Further, even if a plurality of opposing moving bodies are detected, the distance to all of the opposing moving bodies cannot be measured at the same time.

It is therefore an object of the present invention to provide a method and a device for detecting nearby moving bodies by a detecting moving body as known from the prior art, which clearly reduces the load of the used communication channels and which nonetheless provides for a risk-oriented detection.

This object is attained by a method of the generic kind that additionally comprises the features of the characterizing portion of new claim 1.

This object is also attained by a device according to new claim 4 that is adapted for carrying out the above-mentioned method.

According to an embodiment of the present invention there is provided a moving body detection system for detecting moving bodies by transmitting and receiving signals between the moving bodies, wherein each moving body transmits an ID code capable of identifying the moving body itself as a fixed output ID code signal of a fixed period, a detecting moving body receives the ID code signal of the same transmission period as the ID code signal based on changes in driving conditions, discriminates the received ID signal and gives an order of priority to each ID code based on the discrimination results, and transmits a detection signal with the ID code and the ID code of the detection side moving body itself added at prescribed time intervals in ID code order, a nearby moving body receives the detection signal, and transmits a response signal with its own ID code and the ID code of the detecting moving body added if the ID code added to the detection signal is the same as its own ID code, and the detecting moving body receives the response signal and measures the distance to the nearby moving body of the ID code of the same response signal.

The detecting moving body discerns the ID code received under receiving conditions having the same transmission period as the ID code signal and decides an order for the ID codes, and transmits a detection signal with the ID code and ID code of the detecting moving body itself added at prescribed time intervals in order from the first ID code. The nearby moving body of the first ID code then responds to the transmission of the initial detection signal and the distance to the same nearby moving body is measured. Next, the nearby moving body of the second ID code responds to the transmission of the second detection signal and the distance to the same nearby moving body is measured. In this manner, the distances to a plurality of nearby moving bodies can be sequentially measured.

The driver of the detecting moving body can therefore confirm the arrangement of the opposing nearby moving bodies.

According to a preferred embodiment of this invention, the detecting moving body receives the ID code, discerns the signal receiving power of the ID code signal and decides an order for the ID codes that is the order of largest signal receiving power.

As the ID code signals are transmitted at fixed outputs, the ID code signal receiving power at the detecting moving body is larger for closer nearby moving bodies.

Further, the distance to nearby moving bodies is measured in order of the closest nearby moving body by deciding the ID code order in order of the largest signal receiving power. The distance to close opposing moving bodies can therefore be known quickly.

In a third aspect of this invention, the detecting moving body receives the ID code signal in a prescribed period of time based on changes in driving conditions where a indicator switch is operated in order to turn from a current lane of travel to another direction.

In the case of turning from the current lane of travel in another direction, and in particular when turning across an opposite lane, it is necessary to detect moving bodies approaching head on in the opposite lane. By then adopting ID code signal receiving conditions based on the operation of a indicator lever in order to turn which operates a indicator switch, the ID code signal of a nearby moving body can be received when necessary, a detection signal is transmitted, opposing moving bodies are sequentially detected and distances can be measured.

In the following, the so far termed "detecting moving body" can also be termed "detection side moving body". The so far termed "nearby moving body" can in the following also be termed as "non-detection side moving body". The respective expressions are synonyms in the present application.
FIG. 1 is a simplified block diagram of a moving body detection system of a first embodiment of the present invention;
FIG. 2 is a flowchart showing the communication control routine of the detection side moving body;
FIG. 3 is a flowchart showing communication control for the non-detection side moving body;
FIG. 4 is a simplified plan view showing the travelling situation of a plurality of cars;
FIG. 5 shows ID codes transmitted by the non-detection side vehicles A, B, C, and D; and
FIG. 6 shows the ID codes received by the detection side vehicle Z.

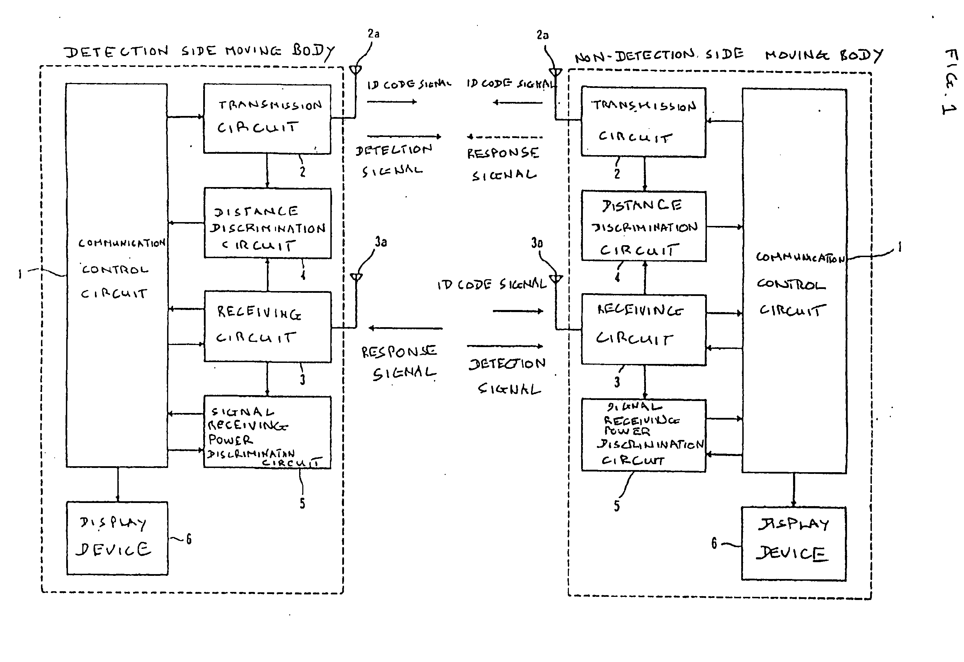

The following is a description of a first embodiment of the present invention shown in FIG. 1 to FIG. 6.

A simplified block diagram of a moving body detection system of this embodiment is shown in FIG. 1.

All of the moving bodies are equipped with the same communication control device.

Namely, a communication control circuit 1 provides a transmission instruction to a transmission circuit 2 and takes as input a signal received by a receiving circuit 3. A distance discrimination signal from a distance discrimination circuit 4 and a signal receiving power discrimination signal from a signal receiving power discrimination circuit 5 are also inputted to the communication control circuit 1 and results of signal processing are outputted to a display device 6 as a display signal.

The transmission circuit 2 transmits an ID code signal, receives a transmission instruction from the communication control circuit 1 and generates a detection signal having a prescribed directivity from a transmission antenna 2a.

The receiving circuit 3 receives the ID code signal, receives a response signal at a receiving antenna 2a and outputs this response signal to the communication control circuit 1.

A signal at the time of generation of the detection signal from the transmission circuit 2 and a signal for the time of receival of the response signal from the receiving circuit 3 are inputted to the distance discrimination circuit 4. The distance discrimination circuit 4 then determines the distance between the detection side moving body and the non-detection side moving body from the time difference of both the signals and outputs a distance determination signal for these determination results to the communication control circuit 1.

The signal receiving power discrimination circuit 5 detects a signal-receiving power value for the ID code signal received by the receiving circuit 3 and outputs a received signal power value signal to the communication control circuit 1.

The communication control circuit 1 then puts each ID code in order in accordance with the magnitude of the receiving power value.

The display device 6 is a liquid crystal display for notifying the driver of the arrangement configuration, i.e. the distance etc. to a non-detection moving body when there is a response signal.

This ID code signal is a fixed output pulse signal of a fixed period T with an ID code from which the moving body itself can be identified by other moving bodies.

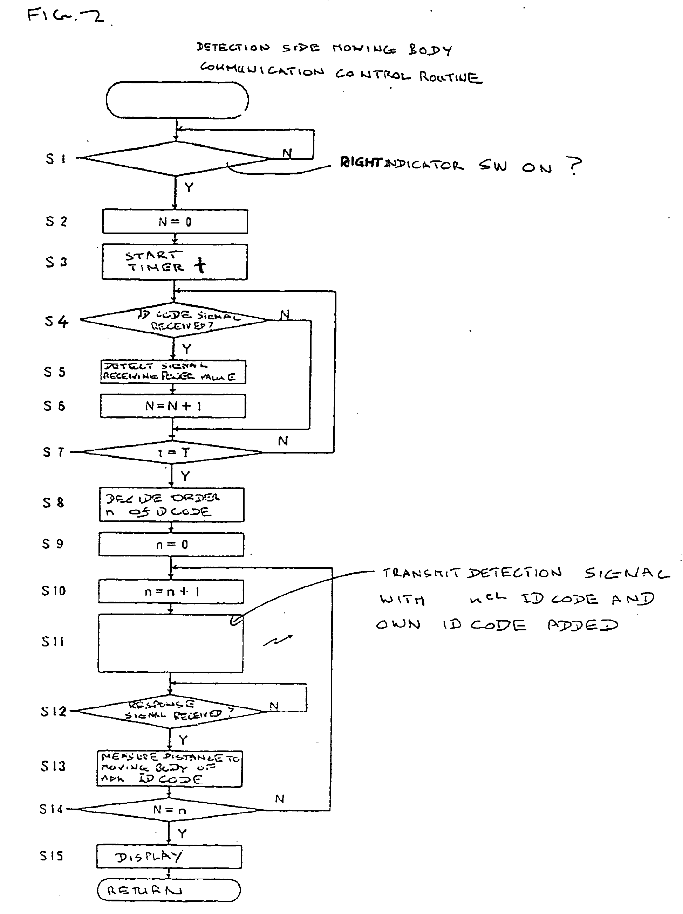

Communication control occurring at the detection side moving body is described in FIG. 2 and communication control occurring at the non-detection side moving body is described in the flowchart of FIG. 3.

The ID code signal is usually transmitted in addition to the communication control shown in FIG. 2 and FIG. 3 for both the detection side moving body and the non-detection side moving body.

In this embodiment, the case where a vehicle proceeds on the left side of the street is given.

Referring to FIG. 2, in the communication control for the detection side moving body, whether or not the detection side moving body is to turn right is determined from the operation of the right indicator switch (step 1). When the right indicator switch is on so that a right turn is about to be made, step 2 is proceeded to, a receival number N for the ID code signal is cleared, the timer t is made to start (step 3), and presence or absence of the receival of an ID code signal is determined in step 4.

When an ID code signal is not received, step 7 is gone to, a determination is made as to whether or not the timer clock time t has reached a setting time T, and step 4 is returned to until the setting time is reached (t=T).

When an ID code signal is received within the setting time T, step 5 is proceeded to from step 4, the signal receiving power value for the received ID code signal is detected, the receival number N is incremented (step 6) and step 7 is proceeded to.

The setting time T is equal to the transmission period T of the ID code signal.

The ID code signal receival conditions are therefore taken to be just the same time as the transmission period T, and when a signal is received during this time the signal receiving power value is detected (step 5) and the receival number N is counted (step 6).

When a prescribed time T is surpassed, step 8 is gone to from step 7, the ID codes for each received ID code signal are put in order of signal receiving power value, and an order n is decided for each ID code.

Namely, the ID code of the ID code signal of the largest signal receiving power is made number 1, the ID code for the ID code signal of the next largest signal receiving power is made number 2, etc., until order is given to the ID code of the Nth ID code signal received.

The count value n is then cleared (step 9), step 10 is proceeded to, the count value n is incremented so that n=1 and step 11 is proceeded to.

In step 11, first, a detection signal with the ID code of number 1 and the ID code of the detection side moving body itself added is transmitted.

Next, the receival of a response signal for this detection signal is awaited.

When a response signal is received, step 13 is proceeded to and the distance to the non-detection side moving body of ID code number 1 is measured.

The distance is measured from the time difference between transmission of the detection signal and the receival of the response signal.

This count number n is compared with the receival number N (step 14) and if the count number n has not reached the receival number N, step 10 is returned to. The count value n is then incremented so that n=2, steps 11, 12, 13 and 14 are repeated, signals are transmitted to and received from the non-detection side moving body of the second ID code and a distance is measured.

Steps 10, 11, 12, 13 and 14 are then repeated N times until the non-detection side moving body of the Nth ID code and when the respective distances are measured, step 15 is proceeded to from step 14 and the measurements are displayed at the display device 6.

In the communication control for the non-detection side moving body, referring to FIG. 3, the receival of a detection signal from the detection side moving body is awaited (step 21), and if received, step 22 is proceeded to and a determination is made as to whether or not the ID code added to the detection signal coincides with the ID code of the moving body itself. If this is not the case, this routine is exited without sending a response signal. If this is the case, step 23 is proceeded to and a response signal with the ID code of the moving body itself and the ID code of the detection side moving body that transmitted the detection signal added is transmitted.

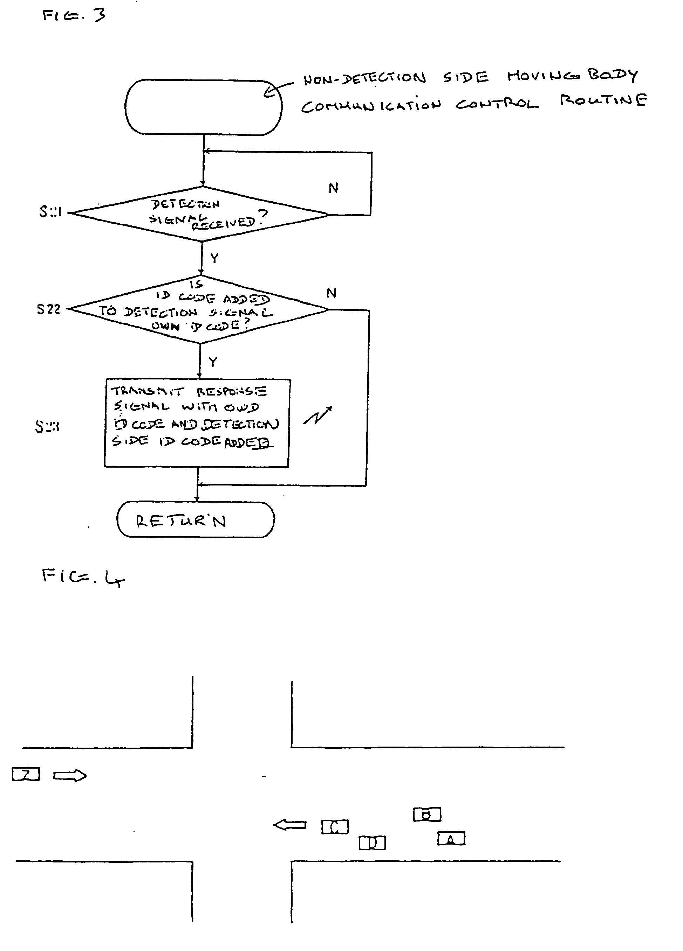

In the above communication control is carried out at a detection side moving body and a non-detection side moving body but the actual control procedure is described in accordance with a specific example shown in FIG. 4 and FIG. 5.

FIG. 4 shows a simplified plan view of the progress of a plurality of vehicles.

A detection side vehicle Z proceeds from the left side towards a crossroads and is intending to turn right at the crossroads.

In the opposite lane, five vehicles A, B, C and D constituting non-detection side vehicles are proceeding towards the crossroads.

Each of the vehicles A, B, C and D transmits its own ID code signal, with ID code signals a, b, c and d for the non-detection side vehicles A, B, C and D being shown in FIG. 5. Each of the ID code signals a, b, c and d are outputted with the same period T but are not in synchronism with each other.

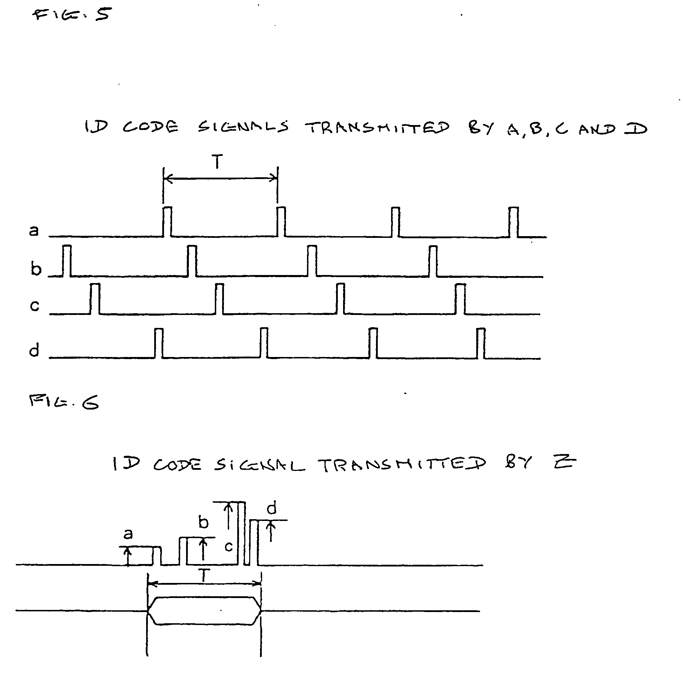

When the right indicator switch is operated in order for the detection side vehicle Z to turn right, the receiving circuit 3 of the detection side vehicle Z adopts a receive state only for the same period of time T as the period T of the ID code signal and, as shown in FIG. 6, ID code signals a, b, c and d for the non-detection side vehicles A, B, C and D are received.

In this example the receival number N is 4 but as each code signal is of the same period T the ID code signals that can be received are all of those within the time T.

The signal receiving power for each of the ID code signals a, b, c and d becomes more attenuated as the place of transmission becomes further away and the signal receiving power is therefore highest for the IC code signal c from the vehicle C which is the closest to the vehicle Z, with the ID code signals d, b and a then following in that order.

The signal receiving power discrimination circuit 5 of the detection side vehicle Z then compares the signal receiving power values for the ID code signals a, b, c and d and gives the ID codes order of priority in the order of largest signal receiving power value.

The order is therefore decided in order of closeness to the detection side vehicle Z, with the ID code of the ID code signal c being first, the ID code of the ID code signal d being second, the ID code of the ID code signal b being third, and the ID code of the ID code signal a being fourth.

The detection side vehicle Z first transmits a detection signal with the first ID code and the ID code of the detection side vehicle itself attached.

As this detection signal then coincides with the ID code of the non-detection side vehicle C, the non-detection side vehicle C transmits a response signal with its own ID code and the detection side ID code added.

This response signal is then received by the detection side vehicle Z and the distance to the non-detection side vehicle C is measured.

Next, the detection side vehicle Z measures the distance to the non-detection side vehicle D by transmitting signals to and receiving signals from the non-detection side vehicle D of the second ID code.

Sequential exchange of signals with the non-detection side vehicles B and A of the third and fourth ID codes is then carried out and the respective distances are measured.

The detection side vehicle Z intending to turn right measures the distances to the four non-detection side vehicles A, B, C and D travelling in the opposite lane for which ID code signals have been received and the driver of the detection side vehicle Z can recognize the arrangement of the four vehicles A, B, C and D.

If the measurements are displayed soon after being measured, the measurements are displayed in order of the nearest vehicle and the distance to the nearest opposing vehicle C can soon be known.

In this embodiment, when the detection side vehicle operates the right indicator switch in order to turn right the ID code is received and a detection signal is transmitted but an ID code signal can be received and a detection signal transmitted using other changes in the driving conditions or driver switch operations etc.

## Claims

1. Method for detecting nearby moving bodies (A, B, C, D) by a detecting moving body (Z), said method comprising the following steps:
- each moving body (Z, A, B, C, D) transmits a fixed output ID code signal of a fixed transmission period (T), said ID code signal comprising an ID code capable of identifying the respective transmitting moving body (Z, A, B, C, D),
- said detecting moving body (Z) receives ID code signals of said fixed transmission period (T) and discriminates said received ID code signals,
- said detecting moving body (Z) transmits a detection signal to each nearby moving body (A, B, C, D) from which an ID code signal was received, said detection signal including the ID code of the respective nearby moving body (A, B, C, D) to which it is addressed,
- a nearby moving body (A, B, C, D) receives said detection signal and, if the ID code included in said detection signal corresponds to the ID code of said nearby moving body, transmits in turn a response signal including its ID code,
- said detecting moving body (Z) receives said response signal and measures the distance to said nearby moving body (A, B, C, D) identified by the ID code included in said response signal,
**characterized in that** the following further steps are carried out:
- said detecting moving body (Z) starts receiving ID code signals of nearby moving bodies (A, B, C, D) based on changes in its driving conditions,
- after discriminating said received ID code signals, an order of priority is established for the received ID codes based on the discrimination results,
- the detection signals are transmitted at prescribed time intervals to each identified nearby moving body in said order of priority, wherein further
- the ID code of said detecting moving body is contained in said detecting signal,
- the ID code of said detecting moving body is contained in said response signal.

2. Method according to claim 1, **characterized in that** said discriminating step further comprises the following sub-steps:
- discerning the signal receiving power of a received ID code signal,
wherein the order of priority for the receiving ID codes is the order from the largest signal receiving power to the lowest signal receiving power.

3. Method according to claim 1 or 2, **characterized in that** said detecting moving body (Z) starts receiving ID code signals of nearby moving bodies (A, B, C, D) when an indicator switch is operated in order to turn from a current lane of travel to another direction.

4. Moving body detection device adapted to carry out the method for detecting nearby moving bodies (A, B, C, D) according to one of the above claims, said system comprising:
- a receiving circuit (3) adapted to receive ID code signals contained in the ID code of a nearby moving body (A, B, C, D),
- a transmission circuit (2) adapted to transmit an ID code signal containing a fixed ID code capable of identifying a moving body (Z, A, B, C, D) to which said detection system is mounted, further adapted to transmit a detection signal including the ID code of the respective nearby moving body (A, B, C, D) to which said detection signal is addressed, and adapted to transmit a response signal containing the ID code of the moving body (Z, A, B, C, D) to which said detecting system is mounted,
- a communication control circuit (1) adapted to discriminate received ID code signals, and
- a distance discrimination circuit (4) adapted to measure the distance between said detecting moving body (Z) to which said detection system is mounted and an nearby moving body (A, B, C, D) identified by the ID code included in said response signal,
**characterized in that** said receiving circuit (3) is further adapted to start receiving ID code signals based on changes in the driving conditions of the detecting moving body (Z),
said communication control circuit is further adapted to establish an order of priority for the received ID codes based on the discrimination results,
said transmission circuit is adapted to transmit detection signals at prescribed time intervals to each identified nearby moving body (A, B, C, D) in said order of priority,
wherein further the ID code of said detecting moving body is contained in said detecting signal, and the ID code of said detecting moving body is contained in said response signal.

5. Moving body detection device according to claim 4, **characterized in that** it further comprises a signal receiving power discrimination circuit (5) adapted to discern the signal receiving power of an ID code signal, wherein said communication control circuit (1) is adapted to establish an order of priority for the received ID codes corresponding to the order from the largest signal receiving power to the lowest signal receiving power of the received ID code signals.

6. Moving body detection device according to claim 4 or 5, **characterized in that** said receiving circuit (3) is adapted to receive ID code signals in a prescribed period of time based on an operation of an indicator switch for turning from a current lane of travel to another direction.

## Patentansprüche

1. Verfahren zur Erfassung nahegelegener sich bewegender Körper (A, B, C, D) durch einen erfassenden sich bewegenden Körper (Z), wobei das Verfahren die folgenden Schritte umfasst:
- jeder sich bewegender Körper (Z, A, B, C, D) überträgt ein ID-Codesignal festgelegter Ausgabe und festgelegter Übertragungsperiode (T), wobei das ID-Codesignal einen ID-Code umfasst, welcher in der Lage ist, den jeweiligen übertragenden sich bewegenden Körper (Z, A, B, C, D) zu identifizieren,
- der erfassende sich bewegende Körper (Z) empfängt ID-Codesignale der festgelegten Übertragungsperiode (T) und diskriminiert die empfangenen ID-Codesignale,
- der erfassende sich bewegende Körper (Z) überträgt ein Erfassungssignal an jeden nahegelegenen sich bewegenden Körper (A, B, C, D), von welchem ein ID-Codesignal empfangen wurde, wobei das Erfassungssignal den ID-Code des jeweiligen nahegelegenen sich bewegenden Körpers (A, B, C, D) enthält, an welchen es adressiert ist,
- ein nahegelegener sich bewegender Körper (A, B, C, D) empfängt das Erfassungssignal und überträgt dann, wenn der in dem Erfassungssignal enthaltene ID-Code dem ID-Code des nahegelegenen sich bewegenden Körpers entspricht, wiederum ein Antwortsignal einschließlich seines ID-Codes,
- der erfassende sich bewegende Körper (Z) empfängt das Antwortsignal und misst den Abstand zu dem nahegelegenen sich bewegenden Körper (A, B, C, D), welcher durch den in dem Antwortsignal enthaltenen ID-Code identifiziert ist,
**dadurch gekennzeichnet, dass** die folgenden weiteren Schritte ausgeführt werden:
- der erfassende sich bewegende Körper (Z) beginnt mit dem Empfangen von ID-Codesignalen von nahegelegenen sich bewegenden Körpern (A, B, C, D) auf Grundlage von Änderungen in seinen Fahrzuständen,
- nach einem Diskriminieren der empfangenen ID-Codesignale wird eine Prioritätsordnung für die empfangenen ID-Codes auf Grundlage der Diskriminierungsergebnisse aufgestellt,
- die Erfassungsergebnisse werden bei vorgeschriebenen Zeitintervallen zu jedem identifizierten nahegelegenen sich bewegenden Körper in der Prioritätsordnung übertragen, wobei ferner
- der ID-Code des erfassenden sich bewegenden Körpers in dem Erfassungssignal enthalten ist,
- der ID-Code des erfassenden sich bewegenden Körpers in dem Antwortsignal enthalten ist.

2. Verfahren nach Anspruch 1, **dadurch gekennzeichnet, dass** der Diskriminierungsschritt ferner die folgenden Unterschritte umfasst:
- Unterscheiden der Signalempfangsleistung eines emfpangenen ID-Codesignals, wobei die Prioritätsordnung für die Empfangs-ID-Codes die Reihenfolge von der größten Signalempfangsleistung zu der kleinsten Signalempfangsleistung ist.

3. Verfahren nach Anspruch 1 oder 2, **dadurch gekennzeichnet, dass** der erfassende sich bewegende Körper (Z) mit dem Empfangen von ID-Codesignalen von nahegelegenen sich bewegenden Körpern (A, B, C, D) beginnt, wenn ein Indikatorschalter betätigt wird, um von einer momentanen Fahrspur zu einer anderen Richtung abzubiegen.

4. Vorrichtung zur Erfassung sich bewegender Körper, welche dazu ausgebildet ist, das Verfahren zur Erfassung nahegelegener sich bewegender Körper (A, B, C, D) nach Maßgabe eines der obigen Ansprüche auszuführen, wobei das System umfasst:
- eine Empfangsschaltung (3), welche dazu ausgebildet ist, ID-Codesignale zu empfangen, welche in dem ID-Code eines nahegelegenen sich bewegenden Körpers (A, B, C, D) enthalten sind,
- eine Übertragungsschaltung (2), welche dazu ausgebildet ist, ein ID-Codesignal, welches einen festen ID-Code enthält, der in der Lage ist, einen sich bewegenden Körper (Z, A, B, C, D), an welchem das Erfassungssystem angebracht ist, zu identifizieren, zu übertragen, welche ferner dazu ausgebildet ist, ein Erfassungssignal zu übertragen einschließlich des ID-Codes des jeweiligen nahegelegenen sich bewegenden Körpers (A, B, C, D), an welchen das Erfassungssignal adressiert ist, und welche dazu ausgebildet ist, ein Antwortsignal zu übertragen, das den ID-Code des sich bewegenden Körpers (Z, A, B, C, D) enthält, an welchen das Erfassungssystem montiert ist,
- eine Kommunikationssteuer/regelschaltung (1), welche dazu ausgebildet ist, empfangene ID-Codesignale zu diskriminieren, und
- eine Abstandsdiskriminierungsschaltung (4), welche dazu ausgebildet ist, den Abstand zwischen dem erfassenden sich bewegenden Körper (Z), an welchem das Erfassungssystem angebracht ist, und einem nahegelegenen sich bewegenden Körper (A, B, C, D), welcher durch den in dem Antwortsignal enthaltenen ID-Code identifiziert ist, zu messen,
**dadurch gekennzeichnet, dass** die Empfangsschaltung (3) ferner dazu ausgebildet ist, mit Empfangen von ID-Codesignalen auf Grundlage von Änderungen in den Fahrzuständen des erfassenden sich bewegenden Körpers (Z) zu beginnen,
die Kommunikationssteuer/regelschaltung ferner dazu ausgebildet ist, eine Prioritätsordnung für die empfangenen ID-Codes auf Grundlage der Diskriminierungsergebnisse aufzustellen, die Übertragungsschaltung dazu ausgebildet ist, Erfassungssignale bei vorgeschriebenen Zeitintervallen zu jedem identifizierten nahegelegenen sich bewegenden Körper (A, B, C, D) in der Prioritätsordnung zu übertragen,
wobei ferner der ID-Code des erfassenden sich bewegenden Körpers in dem Erfassungssignal enthalten ist und der ID-Code des erfassenden sich bewegenden Körpers in dem Antwortsignal enthalten ist.

5. Erfassungsvorrichtung für sich bewegende Körper nach Anspruch 4, **dadurch gekennzeichnet, dass** sie ferner eine Signalempfangsleistungs-Diskriminierungsschaltung (5) umfasst, welche dazu ausgebildet ist, die Signalempfangsleistung eines ID-Codesignals zu unterscheiden, wobei die Kommunikationssteuer/regelschaltung (1) dazu ausgebildet ist, eine Prioritätsordnung für die empfangenen ID-Codes aufzustellen, welche der Reihenfolge von der größten Signalempfangsleistung zu der niedrigsten Signalempfangsleistung der empfangenen ID-Codesignale entspricht.

6. Erfassungsvorrichtung für sich bewegende Körper nach Anspruch 4 oder 5, **dadurch gekennzeichnet, dass** die Empfangsschaltung (3) dazu ausgebildet ist, ID-Codesignale in einer vorgeschriebenen Zeitdauer auf Grundlage einer Betätigung eines Indikatorschalters zum Abbiegen von einer momentanen Fahrspur zu einer anderen Richtung zu empfangen.

## Revendications

1. Procédé pour détecter des corps mobiles proches (A, B, C, D) par l'intermédiaire d'un corps mobile de détection (Z), ledit procédé comportant les étapes suivantes :
- chaque corps mobile (Z, A, B, C, D) transmet un signal de code ID de sortie fixe d'une période de transmission fixe (T), ledit signal de code ID comportant un code ID capable d'identifier le corps mobile de transmission respectif (Z, A, B, C, D),
- ledit corps mobile de détection (Z) reçoit des signaux de code ID de ladite période de transmission fixe (T) et discrimine lesdits signaux de code ID reçus,
- ledit corps mobile de détection (Z) transmet un signal de détection à chacun des corps mobiles proches (A, B, C, D) en provenance desquels un signal de code ID a été reçu, ledit signal de détection incluant le code ID du corps mobile proche respectif (A, B, C, D) auquel il est destiné,
- un corps mobile proche (A, B, C, D) reçoit ledit signal de détection et, si le code ID inclus dans ledit signal de détection correspond au code ID dudit corps mobile proche, transmet à son tour un signal de réponse incluant son code ID,
- ledit corps mobile de détection (Z) reçoit ledit signal de réponse et mesure la distance jusqu'audit corps mobile proche (A, B, C, D) identifié par le code ID inclus dans ledit signal de réponse,
**caractérisé en ce que** les étapes supplémentaires suivantes sont exécutées :
- ledit corps mobile de détection (Z) commence à recevoir des signaux de code ID des corps mobiles proches (A, B, C, D) sur la base de changements dans leurs conditions de conduite,
- après avoir discriminé lesdits signaux de code ID reçus, un ordre de priorité est établi pour les codes ID reçus sur la base des résultats de discrimination,
- les signaux de détection sont transmis selon des intervalles de temps prescrits à chaque corps mobile proche identifié dans ledit ordre de priorité, dans lequel en outre
- le code ID dudit corps mobile de détection est contenu dans ledit signal de détection,
- le code ID dudit corps mobile de détection est contenu dans ledit signal de réponse.

2. Procédé selon la revendication 1, **caractérisé en ce que** ladite étape de discrimination comporte en outre les sous-étapes suivantes :
- discerner la puissance de réception de signal d'un signal de code ID reçu, l'ordre de priorité pour les codes ID de réception étant l'ordre depuis la puissance de réception de signal la plus grande jusqu'à la puissance de réception de signal la plus faible.

3. Procédé selon la revendication 1 ou 2, **caractérisé en ce que** ledit corps mobile de détection (Z) commence à recevoir des signaux de code ID de corps mobiles proches (A, B, C, D) lorsqu'un commutateur indicateur est actionné afin de passer d'une voie de circulation courante à une autre direction.

4. Dispositif de détection de corps mobile adapté pour mettre en oeuvre le procédé pour détecter des corps mobiles proches (A, B, C, D) selon l'une des revendications ci-dessus, ledit système comportant :
- un circuit de réception (3) adapté pour recevoir des signaux de code ID contenus dans le code ID d'un corps mobile proche (A, B, C, D),
- un circuit de transmission (2) adapté pour transmettre un signal de code ID contenant un code ID fixe capable d'identifier un corps mobile (Z, A, B, C, D) sur lequel ledit système de détection est monté, adapté en outre pour transmettre un signal de détection incluant le code ID du corps mobile proche respectif (A, B, C, D) auquel ledit signal de détection est destiné, et adapté pour transmettre un signal de réponse contenant le code ID du corps mobile (Z, A, B, C, D) sur lequel ledit système de détection est monté,
- un circuit de commande de communication (1) adapté pour discriminer des signaux de code ID reçus, et
- un circuit de discrimination de distance (4) adapté pour mesurer la distance entre ledit corps mobile de détection (Z) sur lequel ledit système de détection est monté et un corps mobile proche (A, B, C, D) identifié par le code ID inclus dans ledit signal de réponse,
**caractérisé en ce que** ledit circuit de réception (3) est en outre adapté pour commencer la réception de signaux de code ID sur la base de changements dans les conditions de conduite du corps mobile de détection (Z),
ledit circuit de commande de communication est en outre adapté pour établir un ordre de priorité pour les codes ID reçus sur la base des résultats de discrimination,
ledit circuit de transmission est adapté pour transmettre des signaux de détection selon des intervalles de temps prescrits à chaque corps mobile proche identifié (A, B, C, D) dans ledit ordre de priorité,
en outre le code ID dudit corps mobile de détection étant contenu dans ledit signal de détection, et le code ID dudit corps mobile de détection étant contenu dans ledit signal de réponse.

5. Dispositif de détection de corps mobile selon la revendication 4, **caractérisé en ce qu'**il comporte en outre un circuit de discrimination de puissance de réception de signal (5) adapté pour discerner la puissance de réception de signal d'un signal de code ID, dans lequel ledit circuit de commande de communication (1) est adapté pour établir un ordre de priorité pour les codes ID reçus correspondant à l'ordre depuis la puissance de réception de signal la plus grande jusqu'à la puissance de réception de signal la plus faible des signaux de code ID reçus.

6. Dispositif de détection de corps mobile selon la revendication 4 ou 5, **caractérisé en ce que** ledit circuit de réception (3) est adapté pour recevoir des signaux de code ID au cours d'une période de temps prescrite sur la base d'une opération d'un commutateur indicateur pour passer d'une voie de circulation courante à une autre direction.
